# EUROPÄISCHE PATENTANMELDUNG

(11) **EP 1 215 466 A2**
(43) Veröffentlichungstag der Anmeldung: **19.06.2002**
(21) Anmeldenummer: 01129031.9
(22) Anmeldetag: 06.12.2001
(51) Int. Cl.: G01C 9/12

(54) **Neigungsgeber**

(30) Priorität: 14.12.2000 DE 10062296
(71) Anmelder: Fernsteuergeräte Kurt Oelsch GmbH, 12347 Berlin (DE)
(72) Erfinder: Schulz, Klaus-Dieter, 12349 Berlin (DE)
(74) Vertreter: Weisse, Jürgen, Dipl.-Phys.

(57) **Zusammenfassung**

Bei einem Neigungsgeber mit einem in einem Neigungsgebergehäuse (10) um eine Drehachse (53) drehbaren Pendelgewicht (84), einer mit dem Pendelgewicht (84) verbundenen Dämpfungsvorrichtung (44) und einem Winkelgeber (48), der auf die Winkellage des Pendelgewichts (84) relativ zu dem Neigungsgebergehäuse (10) anspricht, ist die Dämpfungsvorrichtung (44) von einer Wirbelstrom-Dämpfungsvorrichtung mit Dauermagneten (28, 30, 32, 34) gebildet, welche mit dem Gehäuse (10) verbunden sind.

## Beschreibung

Die Erfindung betrifft einen Neigungsgeber mit einem in einem Neigungsgebergehäuse um eine Drehachse drehbaren Pendelgewicht, einer mit magnetfelderzeugenden Mitteln versehenen Wirbelstrom-Dämpfungsvorrichtung und einem Winkelgeber, der auf die Winkellage des Pendelgewichts relativ zu dem Neigungsgebergehäuse anspricht.

Insbesondere bezieht sich die Erfindung auf Neigungsgeber zur Messung der Neigung von Teleskopauslegern von Kranen oder Kranfahrzeugen. Die Länge, auf welche ein solcher Teleskopausleger ausgefahren werden darf, hängt von der Neigung des Teleskopauslegers ab. Je stärker der Teleskopausleger gegen die Horizontale geneigt ist, desto weiter kann er ausgefahren werden, ohne daß ein unzulässig hohes Kippmoment auftritt. Es sind daher Neigungsgeber mit einem Pendelgewicht bekannt, die mit einem Neigungsgebergehäuse an dem Teleskopausleger angebracht sind. Das Pendelgewicht stellt sich relativ zu dem Neigungsgebergehäuse in eine Position ein, die von der Neigung des Teleskopauslegers abhängt. Diese Position wird von einem Winkelgeber gemessen. Um Pendelschwingungen des Pendelgewichts bei der Bewegung oder bei Erschütterungen des Teleskopauslegers zu vermeiden, ist das Pendelgewicht mit einer Dämpfungsvorrichtung verbunden.

Durch die DE 40 19 144 C2 ist ein Neigungsgeber bekannt, bei welchem die Dämpfungsvorrichtung eine Öldämpfung ist. Eine Öldämpfung setzt eine Dämpfungsflüssigkeit voraus, die in einem flüssigkeitsdichten Gehäuse enthalten ist. In diesem Gehäuse ist auch das Pendelgewicht gelagert. Zur Erzeugung eines Neigungssignals muß die Bewegung des Pendelgewichts auf einen analogen oder digitalen Winkelgeber übertragen werden. Das bedingt eine flüssigkeitsdichte Durchführung durch die Wandung des Gehäuses zu einem notwendigerweise außerhalb des Gehäuses angebrachten Winkelgeber. Eine solche Durchführung bietet Schwierigkeiten. Die Durchführung muß über lange Zeit wartungsfrei dicht sein. Die Neigungsgeber sind im Betrieb rauhen Umweltbedingungen ausgesetzt wie Regen, Staub, extremen Temperaturen und Vibrationen. Andererseits darf die Dichtung nur geringe Reibungsmomente hervorrufen, damit die Winkelmessung nicht verfälscht wird. Die DE 40 19 144 C2 sieht daher eine magnetische Durchführung vor. Eine solche magnetische Durchführung ist konstruktiv aufwendig und sperrig. Weiterhin ist das als Dämpfungsflüssigkeit verwendete Öl einer Alterung unterworfen. Dadurch ändert es mit der Zeit seine Eigenschaften. Normales Öl ändert seine Viskosität mit der Temperatur. Öl, dessen Viskosität und damit dessen Dämpfungsverhalten über einen großen Temperaturbereich hinweg einigermaßen konstant ist, ist teuer. Bei Bewegung des Teleskopauslegers oder eines sonstigen zu überwachenden Teils tritt durch die Trägheit eine Bewegung des Öls relativ zu dem Gehäuse ein, was zu einem Überschwingen führen kann.

Durch die DE 195 38 114 A1 ist ein Neigungsgeber mit Wirbelstromdämpfung bekannt. Der Neigungsgeber weist ein in einem Neigungsgebergehäuse um eine Drehachse drehbaren Drehpendel. Magnetfelderzeugende Mittel sind mit dem Drehpendel verbunden. Ein magnetoresistives Element ist als gehäusefester Sensor vorhanden, mit dem eine Änderung des Magnetfeldes detektierbar ist. Bei einer Änderung des Drehwinkels des Drehpendels aufgrund einer Neigungsbewegung ändern die mit dem Drehpendel erzeugten magnetischen Feldlinien ihre Richtung relativ zum Sensor, so daß die Neigungsbewegung magnetisch abgreifbar ist. Zur Erzeugung einer Dämpfung des Pendelsystems kann eine Wand des Gehäuses aus einem elektrisch leitfähigem Material bestehen. Bei einer Bewegung des Drehpendels entsteht dann aufgrund einer Mitbewegung des magnetischen Feldes Wirbelströme in dem leitfähigem Material, die nach dem Prinzip einer Wirbelstrombremse die Pendelbewegung abbremsen.

Der in DE 195 38 114 A1 beschriebene Neigungsgeber hat den Nachteil, daß der Neigungsgeber nicht in der Nähe von magnetisch leitfähigen Teile oder anderen Dauermagneten betrieben werden kann, ohne daß die Gefahr einer Verfälschung des Meßergebnisses auftritt. Solche leitfähigen Teile in der Nähe des Neigungsgeber beeinflußt dabei nicht nur das Meßergebnis, sondern auch das Dämpfungsverhalten der Wirbelstromdämpfung.

Der Erfindung liegt die Aufgabe zu Grunde, einen Neigungsgeber konstruktiv zu vereinfachen, wartungsfrei zu gestalten und dabei eine über einen großen Temperaturbereich konstante Dämpfung zu erzielen, bei welchem die Beeinflussung des Dämpfungsverhaltens durch äußere Gegebenheiten gering ist.

Erfindungsgemäß wird diese Aufgabe bei einem Neigungsgeber der eingangs genannten Art dadurch gelöst, daß die magnetfelderzeugenden Mittel der Wirbelstrom-Dämpfungsvorrichtung mit dem Neigungsgebergehäuse verbunden sind.

Der vorliegenden Erfindung liegt die Kenntnis zugrunde, daß die Magnete der Wirbelstromdämpfung, wenn sie nicht Teil des Sensorsystems zum Detektieren der Winkellage des Pendels ist, gehäusefest angeordnet werden können. Dadurch treten die oben genannten Probleme nicht auf, da das Gehäuse an dem Teil befestigt wird, dessen Neigung festgestellt werden soll.

Die Erfindung ist dann besonders vorteilhaft bei Neigungsgeber, welche zur Messung der Neigung von Teleskopauslegern von Kranen oder Kranfahrzeugen ausgelegt sind, da diese immer in der Nähe von elektrisch leitfähigem Material verwendet werden.

Wirbelstrom-Dämpfungsvorrichtungen sind an sich bekannt. Die Erfindung beruht auf der Erkenntnis, daß solche Wirbelstrom-Dämpfungsvorrichtungen, bei welchen die magnetfelderzeugenden Mittel mit dem Gehäuse verbunden sind, für die Dämpfung von Neigungsgebern unter den oben geschilderten Bedingungen geeignet sind, insbesondere Schwingungen ausreichend dämpfen, die bei Vibrationen der Teleskopausleger o. dgl. Auftreten, und auch bei Verwendung von Dauermagneten zur Erzeugung des Magnetfeldes eine hinreichend temperaturkonstante Dämpfung liefern. Es sei erwähnt, daß die magnetfelderzeugende Mittel auch von anderen Mitteln als Dauermagnete gebildet werden können.

Die Verwendung einer Wirbelstromdämpfung bei einem Neigungsgeber bietet erhebliche Vorteile: Es braucht kein öldicht abgeschlossenes Gehäuse vorgesehen zu werden. Die Dämpfungseigenschaften bleiben über lange Zeit konstant. Die Bewegung des Pendelgewichts kann bequem auf einen beliebigen Winkelgeber übertragen werden, insbesondere auch auf einen optischen Winkelgeber.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig. 1: ist eine Ansicht des Neigungsgebers von rechts in Fig.2 gesehen bei abgenommenem Deckel.
- Fig.2: zeigt einen Längsschnitt durch den Neigungsgeber längs der vertikalen Mittellinie von Fig. 1.

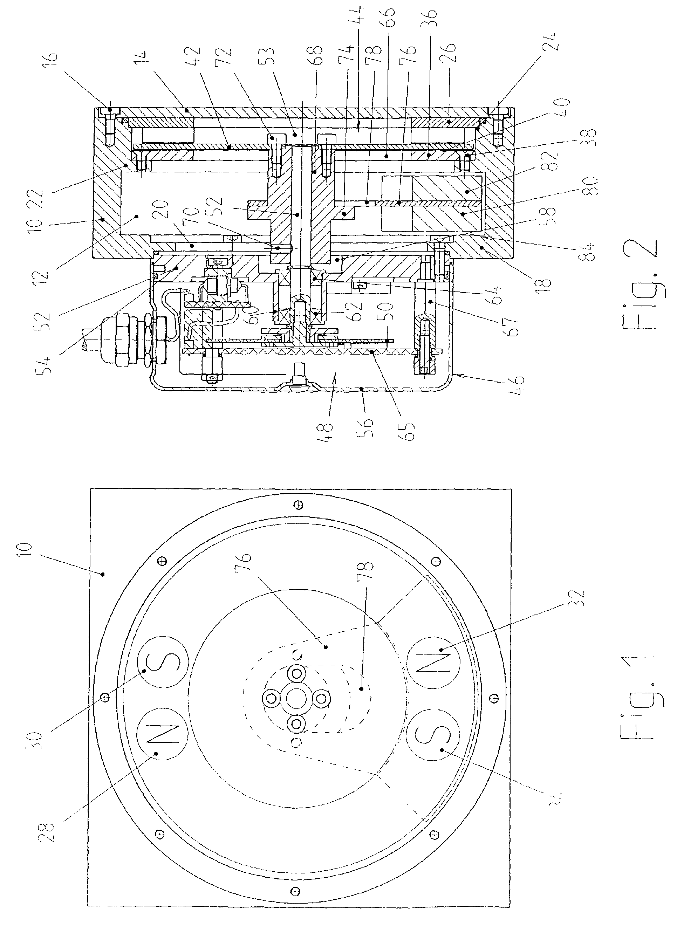

In Fig.2 ist mit 10 ein Neigungsgebergehäuse bezeichnet. Das Neigungsgebergehäuse 10 hat quaderförmige Außenkonturen (Fig. 1) und einen Innenraum 12 von zylidrischer Grundform. Der Innenraum 12 ist nach rechts in Fig.2 offen und durch einen Deckel 14 abgeschlossen. Der Deckel 14 ist durch Schrauben 16 befestigt. In der in Fig.2 linken Stirnwand 18 des Neigungsgebergehäuses 10 ist ein Durchbruch 20 vorgesehen. Ein Flansch 22 ragt von der Mantelfläche nach innen in den Innenraum 12 hinein.

An dem Rand des nach rechts hin offenen Neigungsgebergehäuses 10 ist eine Ringschulter 24 gebildet. Auf der Ringschulter 24 sitzt eine ringscheibenförmige Eisenplatte 26. Auf der in Fig.2 linken Fläche der Eisenplatte 26 sind zwei Paare von Dauermagneten 28,30 und 32,34 angebracht. Die Dauermagneten 28, 30, 32 und 34 sind anisotrope, axial magnetisierte Rundblockmagnete aus einem seltene Erden enthaltenden Material wie Neofer ™. Die Dauermagnete 28 und 30 sind so angeordnet, daß ihre Südpole links in Fig.2 liegen und die Dauermagnete 28 und 30 mit ihren Nordpolen an der Eisenplatte 26 anliegen. Die Dauermagnete 30 und 34 sind so angeordnet, daß ihre Nordpole links in Fig.2 liegen und die Dauermagnete 28 und 30 mit ihren Südpolen an der Eisenplatte 26 anliegen. Die Dauermagnete 28 und 30 sitzen nebeneinander auf einer Seite der Eisenplatte 26. Die Dauermagnete 32 und 34 sitzen nebeneinander auf der gegenüberliegenden Seite der Eisenplatte. Die Dauermagnete gleicher Polung, d.h. 28 und 32 bzw. 30 und 34 sind jeweils diametral gegenüberliegend angeordnet. An dem Flansch 22 ist auf der der ersten Eisenplatte 26 zugewandten Seite eine zweite ringscheibenförmige Eisenplatte 36 mit Schrauben 38 befestigt. Die zweite Eisenplatte 36 ist parallel zu der ersten Eisenplatte 26. Zwischen den Polflächen der Dauermagnete 28, 30, 32 und 34 und der zweiten Eisenplatte 36 ist ein Luftspalt 40 gebildet. In diesem Luftspalt 40 ist eine kreisförmige Aluminiumscheibe 42 beweglich. Diese Anordnung mit den Eisenplatten 26 und 36, den Dauermagneten 28, 30, 32 und 34 und der Aluminiumscheibe 42 bildet eine Wirbelstrom-Dämpfungsvorrichtung, die generell mit 44 bezeichnet wird.

Vor dem Durchbruch 20 sitzt ein Winkelgebergehäuse 46. Das Winkelgebergehäuse 46 enthält einen Winkelgeber, der generell mit 48 bezeichnet ist. Bei dem dargestellten Ausführungsbeispiel ist der Winkelgeber 48 ein optischer Winkelgeber mit einer Codierscheibe 50. Die Codiersscheibe 50 sitzt auf dem in Fig.2 linken Ende einer Winkelgeberwelle 52 mit einer Drehachse 53. Das Winkelgebergehäuse 46 besteht aus einer Grundplatte 54 und einer auf die Grundplatte 54 aufgesetzten Kappe 56. Die Grundplatte 54 hat einen zentralen Durchbruch 58, der von einem Kragen 60 umgeben ist. In dem Kragen 60 ist die Winkelgeberwelle 52 über Wälzlager 62 und 64 drehbar gelagert. Eine Platine 65 ist über Abstandsstücke 67 an der Grundplatte 54 gehaltert. Die Platine 65 trägt Abgriffmittel für die Codierscheibe. Von den Wälzlagern 62 und 64 aus erstreckt sich die Winkelgeberwelle 52 nach rechts in Fig.2 durch den Durchbruch 58 der Grundplatte 54 und den Durchbruch 20 in der Stirnwand 18 des Neigungsgebergehäuses 10 hindurch, durch den Innenraum 12 und durch den Durchbruch 66 der ringscheibenförmigen Eisenplatte 36.

Auf dem so fliegend gelagerten Ende der Winkelgeberwelle 52 sitzt ein Nabenkörper 68 von zylindrischer Grundform. Der Nabenkörper 68 ist durch eine Madenschraube 70 auf der Winkelgeberwelle 52 festgeklemmt und so starr mit der Winkelgeberwelle 52 verbunden. Die Aluminiumscheibe 42 ist durch Schrauben 72 an der Stirnfläche des Nabenkörpers 68 befestigt.

Der Nabenkörper 68 weist einen Flansch 74 auf. An dem Flansch 74 ist ein allgemein sektorförmiger Plattenkörper 76 mit einem Durchbruch 78 befestigt. An dem Plattenkörper 76 sind längs dessen Peripherie bogenförmige Gewichtskörper 80 und 82 befestigt. Der Plattenkörper 76 mit den Gewichtskörpern 80 und 82 bildet ein Pendelgewicht 84 des Neigungsgebers. Das Pendelgewicht 84 sucht sich nach dem Lot so einzustellen, daß die Gewichtskörper unten hängen. Dadurch wird auch der Nabenkörper 68 entsprechend der Lotrichtung verdreht und mit diesem die Winkelgeberwelle 52. Die Winkelgeberwelle 52 verdreht die Codierscheibe 50 des Winkelgebers 48. Der Winkelgeber 48 liefert dann einen digitalen Wert für den Neigungswinkel.

Eine Dämpfung der Bewegung des Pendelgewichts 84 erfolgt durch die Wirbelstrom-Dämpfungsvorrichtung 44. Durch die Bewegung der Aluminiumscheibe 42 im Magnetfeld der Dauermagnete 28, 30, 32 und 34 um die Drehachse 53 werden in der elektrisch gut leitenden Aluminiumscheibe 42 Wirbelströme induziert. Durch die Wechselwirkung dieser Wirbelströme mit dem Magnetfeld wirken auf die Aluminiumscheibe in bekannter Weise Kräfte, die der Bewegung entgegengerichtet sind. Das ist die bekannte Funktion der Wirbelstromdämpfung.

## Patentansprüche

1. Neigungsgeber mit einem in einem Neigungsgebergehäuse (10) um eine Drehachse (53) drehbaren Pendelgewicht (84), einer mit magnetfelderzeugenden Mitteln (28,30,32,34) versehenen Wirbelstrom-Dämpfungsvorrichtung (44) und einem Winkelgeber (48), der auf die Winkellage des Pendelgewichts (84) relativ zu dem Neigungsgebergehäuse (10) anspricht, **dadurch gekennzeichnet, daß** die magnetfelderzeugenden Mittel der Wirbelstrom-Dämpfungsvorrichtung (44) mit dem Neigungsgebergehäuse (10) verbunden sind.

2. Neigungsgeber nach Anspruch 1, **dadurch gekennzeichnet, daß** die Wirbelstrom-Dämpfungsvorrichtung mit Dauermagneten (28,30,32,34) aufgebaut ist.

3. Neigungsgeber nach Anspruch 2 **dadurch gekennzeichnet, daß**
(a) die Wirbelstrom-Dämpfungsvorrichtung ein Paar von parallelen, ferromagnetischen Platten (26,36) aufweist, deren Ebenen senkrecht zu der Drehachse (53) des Pendelgewichts (84) verlaufen,
(b) auf einer ersten dieser Platten (84) wenigstens ein Paar von Dauermagneten (28,30,32,34) angeordnet ist, die mit unterschiedlich polarisierten Polflächen der zweiten Platte (40) zugewandt sind,
(c) zwischen diesen Polflächen und der zweiten Platte (36) ein Luftspalt (40) gebildet ist und
(d) eine mit dem Pendelgewicht (84) verbundene Scheibe (42) aus elektrisch gut leitendem Material in dem Luftspalt (40) beweglich ist.

4. Neigungsgeber nach Anspruch 3 **dadurch gekennzeichnet, daß**
(a) die zweite Platte (36) mit einem zentralen Durchbruch (66) versehen ist,
(b) ein um die Drehachse (53) drehbar gelagerter Nabenkörper (68) das Pendelgewicht (84) trägt, mit einem Ende durch den Durchbruch (66) der zweiten Platte (36) hindurchragt und an diesem Ende die Scheibe (42) aus elektrisch gut leitendem Material trägt.

5. Neigungsgeber nach Anspruch 4 **dadurch gekennzeichnet, daß**
(a) an dem das Pendelgewicht (84) und die Wirbelstrom-Dämpfungsvorrichtung (44) enthaltenden Neigungsgebergehäuse (10) ein Winkelgebergehäuse (46) sitzt,
(b) eine Winkelgeberwelle (52) in dem Winkelgebergehäuse (46) in wenigstens zwei Lagern (62,64) drehbar gelagert ist und auf der Seite des Neigungsgebergehäuses (10) aus dem Winkelgebergehäuse (46) heraus- und durch einen Durchbruch (20) in das Neigungsgebergehäuse (10) hineinragt und
(c) der Nabenkörper (68) auf dieser Winkelgeberwelle (52) sitzt und mit dieser starr verbunden ist.

6. Neigungsgeber nach einem der Ansprüche 1 bis 5 **dadurch gekennzeichnet, daß** auf der ersten ferromagnetischen Platte (26) zwei Paare von Dauermagneten (28,30;32,34) angeordnet sind, wobei die Dauermagnete gleicher Polung jeweils in bezug auf die Drehachse (53) diametral gegenüberliegend angeordnet sind.

7. Neigungsgeber nach einem der Ansprüche 1 bis 6 **dadurch gekennzeichnet, daß** die Dauermagnete (28,30;32,34) anisotrope, axial magnetisierte Rundblockmagnete sind.

8. Neigungsgeber nach Anspruch 7, **dadurch gekennzeichnet, daß** die Dauermagnete (28,30;32,34) aus einem seltene Erden enthaltenden Material wie Neofer ™ bestehen.
